(19) Europäisches Patentamt

European Patent Office

Office européen des brevets

(11) **EP 0 703 430 B1**

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(51) Int Cl.$^7$: **G01B 21/04**

(21) Anmeldenummer: **95114032.6**

(22) Anmeldetag: **07.09.1995**

(54) **Verfahren zur Kalibrierung eines Koordinatenmessgerätes mit zwei rotatorischen Achsen**

Procedure to calibrate a coordinate-measuring machine with two rotational axes

Procédé de calibration d'une machine de mesure de coördonnées à deux axes de rotation

(84) Benannte Vertragsstaaten:
**DE ES FR GB IT SE**

(30) Priorität: **23.09.1994 DE 4434014**

(43) Veröffentlichungstag der Anmeldung:
**27.03.1996 Patentblatt 1996/13**

(73) Patentinhaber:
• **Carl Zeiss**
**89518 Heidenheim (Brenz) (DE)**
Benannte Vertragsstaaten:
**DE ES FR IT SE**
• **Carl-Zeiss-Stiftung, trading as Carl Zeiss**
**89518 Heidenheim (Brenz) (DE)**
Benannte Vertragsstaaten:
**GB**

(72) Erfinder:
• **Herzog, Klaus**
**D-73430 Aalen (DE)**
• **Lotze, Werner**
**D-01309 Dresden (DE)**

(56) Entgegenhaltungen:
EP-A- 0 519 638      DE-A- 4 238 139
US-A- 5 313 410

• **TECHNISCHES MESSEN TM, MARCH 1984, WEST GERMANY, Bd. 51, Nr. 3, ISSN 0171-8096, Seiten 83-95, XP002028460 SCHUSSLER H -H: "Master pieces for coordinate measuring machines, machine tools and measuring robots"**

EP 0 703 430 B1

## Beschreibung

Das kinematische System von Koordinaten-Meßmaschinen, Werkzeugmaschinen und zahlreichen anderen Verarbeitungsmaschinen, die einen in einer Ebene oder im Raum beweglichen Taster oder ein Werkzeug besitzen, wird bei höheren Genauigkeits-Anforderungen üblicherweise durch zwei oder drei zueinander rechtwinklige und aufeinander aufbauende Linearführungen realisiert, wobei den Linearführungen lineare Meßsysteme zugeordnet sind. Diese bekannten Systeme haben den Vorteil einer einfachen Kinematik, die aber nur mit sehr aufwendigen konstruktiven Maßnahmen und hohem Fertigungsaufwand realisiert werden können. Daneben besitzen die bewegten mechanischen Bauteile dieser Systeme eine relativ große Masse.

Baulich sehr viel einfacher lassen sich ebene kinematische Systeme mit zwei parallelen Drehgelenken ausführen. Koordinatenmeßgeräte, die nach diesem Prinzip aufgebaut sind und deren Taster demzufolge an einem Gelenkarm mit zwei aufeinander folgenden parallelen Drehachsen in einer Ebene beweglich geführt sind, sind beispielsweise in der GB-PS 1 498 009, der US-PS 4 891 889 sowie der DE-OS 42 38 139 beschrieben. Der Gelenkarm des in der DE-OS 42 38 139 beschriebenen Koordinatenmeßgerätes ist zusätzlich an einer vertikalen Linearführung mit einem linearen Meßsystem zur Erfassung der Bewegung des Gelenkarms in der vertikalen z-Richtung angeordnet.

Der Vorteil solcher Anordnungen mit zwei parallelen Gelenkachsen ist die einfache mechanische Ausführung der massearmen Gelenkteile, die gegenüber Geräten mit kartesischen Führungen eine einfache Handhabung beispielsweise zur kontinuierlichen Abtastung von Profilen ermöglichen.

Um mit den genannten "Gelenkarmgeräten" hochgenaue Messungen durchführen zu können, ist es jedoch erforderlich, die Grundgeometrie des Geräts, d.h. die Längen R1, R2 der Gelenkarme, die Nullstellungeh φ0 und ψ0 der den Drehachsen zugeordneten Winkelmeßsysteme und den Durchmesser dT der für das Messen eingewechselten Tastkugel genau zu kennen. Zu diesem Zwecke muß das Gerät kalibriert werden und zwar nicht nur einmal, sondern jedesmal dann, wenn sich die genannten Hauptabmessungen ändern. Das ist beispielsweise immer dann der Fall, wenn ein neuer Taster eingewechselt wird. Hierbei ändert sich in der Regel nicht nur der Durchmesser dT der Tastkugel, sondern auch die wirksame Länge R2 des zweiten Gelenkarmes.

Darüberhinaus ist es auch zweckmäßig, die Unparallelität der Drehachsen untereinander und gegenüber der Linearführung, an der der Gelenkarm angeordnet ist, sowie die elastischen Deformationen der einzelnen Gelenkglieder unter ihrem Eigengewicht und den Betätigungs- bzw. Meßkräften im Rahmen einer Kalibrierung zu erfassen. Denn auch die letztgenannten Einflüsse können systematische Fehler zur Folge haben, die sich über das Gelenksystem in sehr komplizierter Weise als räumliche Meß- bzw. Positionsfehler des Tasters auswirken.

Zur Kalibrierung von Koordinatenmeßgeräten hat man bisher überwiegend Laserinterferometer benutzt, mit denen die Position eines an dem Taster befestigten Reflektor-Prismas beim Verfahren des Tasters im Meßbereich des Koordinatenmeßgerätes unabhängig von den Meßsystemen des Koordinatenmeßgerätes bestimmt wurde. Darüber hinaus wird auch die sogenannte Kugelstab-Methode angewandt, bei der ein beidseitig mit Kugelgelenken versehener Stab bekannter Länge am Meßtisch des Koordinatenmeßgerätes und an dessen Taster gelenkig befestigt und im Meßbereich verschwenkt wird. Derartige Kalibrierverfahren mit Laserinterferometern und Kugelstäben sind beispielsweise in der EP-PS 0 304 460, der EP-PS 0 275 428, der EP-PS 0 279 926 sowie der EP-PS 0 386 115 beschrieben. Diese bekannten Kalibrierverfahren sind relativ zeitaufwendig und benötigen eine Vielzahl teurer Kalibrierwerkzeuge. Zur routinemäßigen Kalibrierung eines Koordinatenmeßgerätes beispielsweise nach jedem Tasterwechsel sind diese Verfahren deshalb nicht geeignet. Außerdem eignen sich Interferometer nur zur Kalibrierung von Koordinatenmeßgeräten, die in karthesischen Koordinaten messen.

Die Europäische Veröffentlichungsschrift EP 0 519 638 A1 zeigt eine Werkzeugmaschine, mit einem in den drei Koordinatenrichtungen verfahrbaren Werkzeugschlitten, an dem außer dem Bearbeitungswerkzeug auch ein Tastkopf zur Vermessung von Werkstücken befestigt werden kann. Bei der gezeigten Werkzeugmaschine befinden sich auf einer gemeinsamen Palette neben einer Vielzahl von zu bearbeitenden Werkstücken zusätzlich auch ein vorgefertigtes Meisterwerkstück, dessen genaue Abmessungen bekannt sind. Nachdem die zu bearbeitenden Werkstücke von der Werkzeugmaschine bearbeitet wurden, wird das Werkzeug gegen den besagten Tastkopf ausgewechselt, wobei dann sowohl die gefertigten Werkstücke, wie auch das Meisterwerkstück vermessen werden. Durch die Abweichungen der gefertigten Werkstücke gegenüber dem Meisterwerkstück können relativ exakt die Abmessungen der gefertigten Werkstücke ermittelt werden, ohne daß es sich bei der Werkzeugmaschine um ein hochgenaues Meßgerät handelt.

Die Druckschrift US 5,313,410 zeigt einen Prüfkörper für ein Koordinatenmeßgerät, bei dem eine Vielzahl von Löchern mit bekannter Position und Größe vorgesehen sind. Der Prüfkörper wird in einer Vielzahl von Stellungen im Meßraum des Koordinatenmeßgerätes positioniert, wobei dann die Bohrungen des Prüfkörpers in den betreffenden Stellungen durch das Koordinatenmeßgerät vermessen werden. Hierdurch kann die Genauigkeit eines bereits kalibrierten Koordinatenmeßgerätes im gesamten Meßraum des Koordinatenmeßgerätes überprüft werden.

Es ist die Aufgabe der vorliegenden Erfindung ein einfaches ohne großen Aufwand durchführbares Kalibrierverfahren für ein Koordinatenmeßgerät anzugeben, dessen Taster über einen Gelenkarm mit zwei aufeinanderfolgenden parallelen Drehachsen in einer Ebene beweglich geführt ist. Mit diesem Verfahren sollten zumindest die in kürzeren Abständen veränderlichen Hauptabmessungen schnell bestimmbar sein.

Diese Aufgabe wird durch ein Verfahren gelöst, welches sich dadurch auszeichnet, daß zur Kalibrierung der Hauptabmessungen (R1, R2, $\varphi_0$, $\psi_O$, dT)des Koordinatenmeßgerätes Konturen bzw. geometrische Elemente an einem Kalibrierkörper mit dem Taster abgefahren werden, die so gewählt sind, daß der Durchmesser der an dem Taster befestigten Tastkugel in das Meßergebnis für die geometrischen Elemente bzw. deren Abstand jeweils mit unterschiedlichem Gewicht oder Vorzeichen eingeht, und daß aus den beim Abfahren der Konturen gewonnenen Meßwerte für die Position des Tasters in der Ebene (x, y) und aus den bekannten Abmessungen der geometrischen Elemente die Hauptabmessungen (R1, R2, ($\varphi_0$, $\psi_O$, dT) bestimmt werden.

Durch die genannten Maßnahmen ist es möglich, die fünf Hauptabmessungen, d. h. die Längen R1 und R2 der beiden Gelenke, die Nullwinkel ($\varphi_0$ und $\psi_O$ der Winkelmeßsysteme und den Durchmesser dT der Tastkugel gleichzeitig äußerst schnell zu bestimmen, indem einfach z. B. zwei entsprechend ausgewählte geometrische Elemente abgefahren werden. Aus der Vielzahl der dabei gewonnenen Meßwerte, die mit der bekannten Sollkontur der geometrischen Elemente gleichgesetzt werden können, lassen sich dann die Hauptabmessungen eindeutig mit hoher Genauigkeit ermitteln.

Die geometrischen Elemente können beispielsweise eine Innen- und eine Außenkontur eines kreisförmigen oder rechteckigen Kalibrierkörpers sein. Beim Messen der Außen- und der Innenkontur geht der Tastkugel-Durchmesser jeweils mit unterschiedlichen Vorzeichen ein. Es ist jedoch auch möglich, einen Kalibrierkörper zu verwenden, der aus zwei Innenbohrungen besteht, die in einem festen bekannten Abstand zueinander angeordnet sind. Zwar geht der Tastkugel-Durchmesser beim Messen der beiden Innenkonturen mit gleichen Vorzeichen in das Meßergebnis ein, jedoch ist der Abstand der beiden Konturen unabhängig vom Tastkugel-Durchmesser, d.h. in den Abstand geht der Tastkugel-Durchmesser mit dem Gewicht Null ein.

Weiterhin können die geometrischen Elemente auch Geraden-Paare mit unterschiedlichem Abstand sein wie z.B. die gegenüberliegenden Seiten eines Rechteckes mit deutlich unterschiedlichen Seitenlängen. Dann geht der Tastkugel-Durchmesser beim Messen des Abstandes der Geraden-Paare verglichen mit dem übrigen Hauptabmessungen jeweils mit unterschiedlichem Gewicht ein und kann ebenfalls ermittelt werden.

Besonders zweckmäßig ist es, das beschriebene Kalibrierverfahren auch für die Fälle zu ergänzen, in denen das Koordinatenmeßgerät einen Taster mit in der Ebene (x, y) auslenkbarem Taststift besitzt. Hier geht man zweckmäßig so vor, daß man ein Kalibriernormal mehrfach mit nach Größe und Richtung unterschiedlicher Auslenkung des Taststifts antastet bzw. abfährt und aus den erhaltenen Meßwerten ($\varphi$, $\psi$) für die Position des Tasters in der Ebene (x, y) und den Meßwerten (u, v) für die Auslenkung des Taststifts die Koeffizienten der Taststift-Auslenkung bestimmt, indem man die beiden parallel aufgenommenen Gruppen von Meßwerten zueinander in Beziehung setzt.

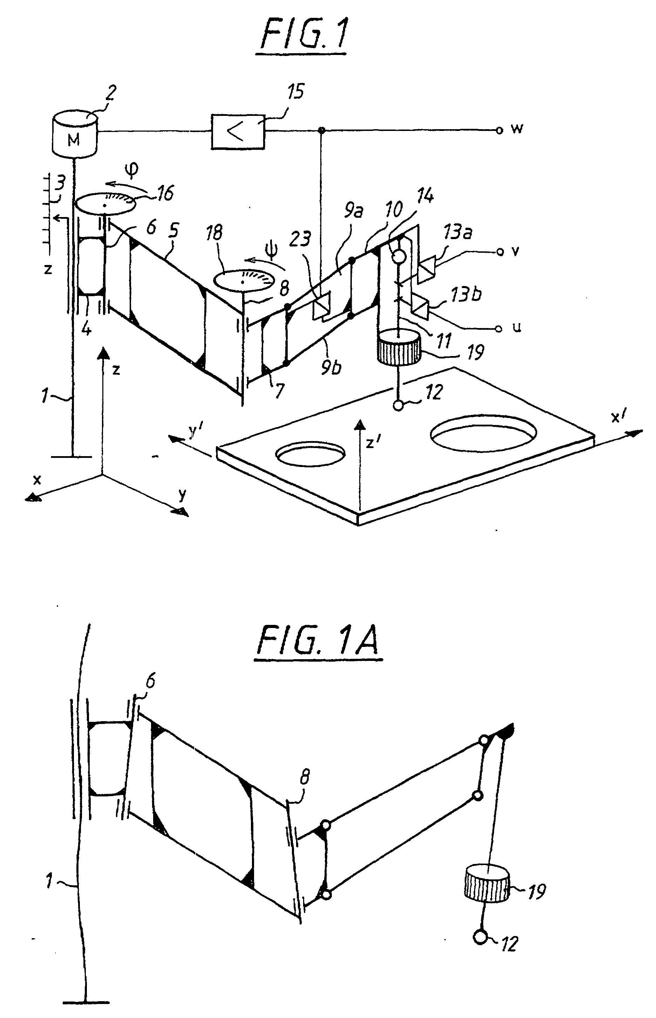

Weitere vorteilhafte Ausgestaltungen und Ergänzungen des Kalibrierverfahrens, insbesondere auch zur Bestimmung von Parallelitäts-Abweichungen der Gelenkachsen und der aufgrund der Betätigungskräfte und dem Eigengewicht hervorgerufenen Verformungen des Gelenkarmes finden sich in den Unteransprüchen und werden nachfolgend anhand der Figuren 1-5 der beigefügten Zeichnungen erläutert:

Figur 1 ist eine kinematische Schemazeichnung eines Koordinatenmeßgeräts mit zwei parallelen Drehachsen;

Figur 1A ist eine vereinfachte Schemazeichnung der Kinematik des Gerätes nach Figur 1, wobei jedoch die Unparallelität der Drehachsen und Verformungen der Gelenkarme überhöht dargestellt sind;

Figur 2 ist eine Prinzipsskizze, in der die Kinematik des Gerätes nach Figur 1 auf eine senkrecht zu den Drehachsen angeordnete Ebene projiziert ist;

Figur 3 ist eine vereinfachte Prinzipszkizze, bei der zusätzlich zur Darstellung nach Figur 2 auch die Taster-Auslenkung berücksichtigt ist;

Figur 4a-d zeigt vier zur Bestimmung der Hauptabmessungen des Koordinatenmeßgeräts nach Figur 1 verwendbare Kalibrierkörper; und

Figur 5 zeigt in perspektivischer Ansicht eine Grundplatte, auf der die zur Kalibrierung sämtlicher Abmessungen, Schieflagen, Verformungen etc. benötigten Kalibrierkörper aufgebracht sind.

Das in Figur 1 schematisch gezeichnete Koordinatenmeßgerät besitzt eine als vertikale z-Führung ausgebildete Säule (1), an der ein Träger (4) mit Hilfe eines Antriebs (2) verschieblich gelagert ist. Die vertikale z-Position kann über einen Maßstab (3) photoelektrisch ausgelesen werden.

Am Träger (4) ist die Drehachse (6) befestigt, um die der erste Gelenkarm (5) in der Ebene (x, y) verschwenkt werden kann. Den Schwenkwinkel ψ gibt ein ebenfalls photoelektrisch ausgelesener Teilkreis (16) auf der Achse (6) an.

Am ersten Gelenkarm (5) ist eine zweite zur vertikalen Achse (6) parallele Achse (8) befestigt. An dieser Achse (8) ist ein zweiter Gelenkarm (7) ebenfalls drehbar gelagert. Zur Erfassung der Drehbewegung dieser zweiten Drehachse (8) dient ein Teilkreis (18) in Verbindung mit einem nicht dargestellten photoelektrischen Abtastsystem.

Der zweite Gelenkarm (7) bildet gleichzeitig den Träger für einen Taster (10), der über ein Federparallelogramm mit den beiden gelenkigen Schenkeln (9a, 9b), am Träger (4) angelenkt ist. Über das Federparallelogramm (9a/9b) ist der Taster (10) in der Vertikalen beweglich. Die Auslenkung w des Federparallelogramms wird über ein Meßsystem (23), beispielsweise ein Induktiv-Meßsystem erfaßt und über einen Verstärker (15) dem Motor (2) weitergemeldet, der größere Auslenkung des Parallelogramms durch Nachfahren des Trägers (4) ausregelt.

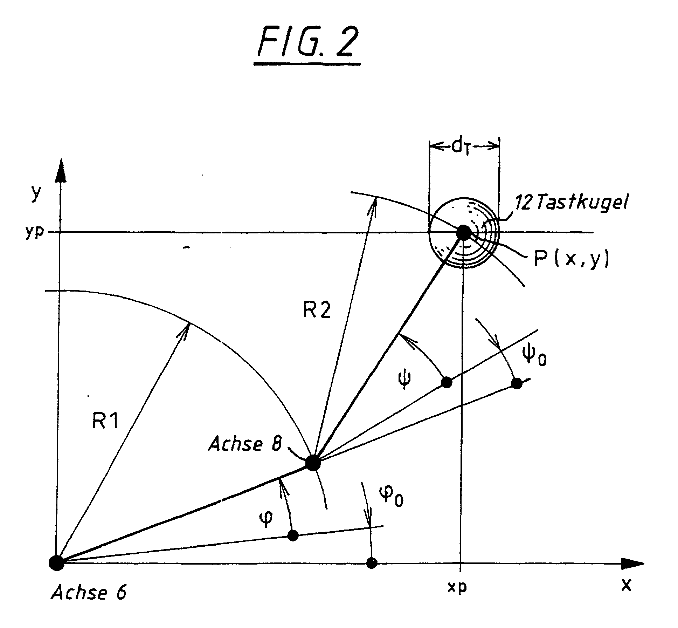

Der Taststift (11) ist am Taster (10) über ein elastisches Kardan-Gelenk (14) in der Ebene (x, y) auslenkbar. Das Maß der Auslenkung wird über zwei senkrecht zueinander angeordnete Meßsysteme (13a, 13b) erfaßt. Die Position P der Tastkugel (12) ergibt sich somit aus den Meßwerten φ und ψ der Winkelmeßsysteme (16) bzw. (18) in Verbindung mit den Längen R1 und R2 der beiden Gelenkarme (5) und (7) nach folgender Formel, die man anhand der Darstellung nach Figur 2 leicht ableiten kann:

$$XP = R1 \cdot \cos (\varphi + \varphi 0) + R2 \cdot \cos(\varphi + \psi + \varphi 0 + \psi 0) \tag{1}$$

$$YP = R1 \cdot \sin(\varphi + \varphi 0) + R2 \cdot \sin (\varphi + \psi + \varphi 0 + \psi 0) \tag{2}$$

Hierbei sind die Auslenkungen u und v des Tasters sowie eventuelle Gerätefehler wie z.B. Unparallelitäten der Drehachsen (6) und (8) und der Führung (1) nicht berücksichtigt.

Während die Parameter R1 und φ0 über einen längeren Zeitraum als konstant angesehen werden können, gilt das nicht für die Parameter R2 und ψ0 sowie für den Tastkugel-Durchmesser dT. Diese unterliegen beim Austausch des Tasters relativ großen Veränderungen.

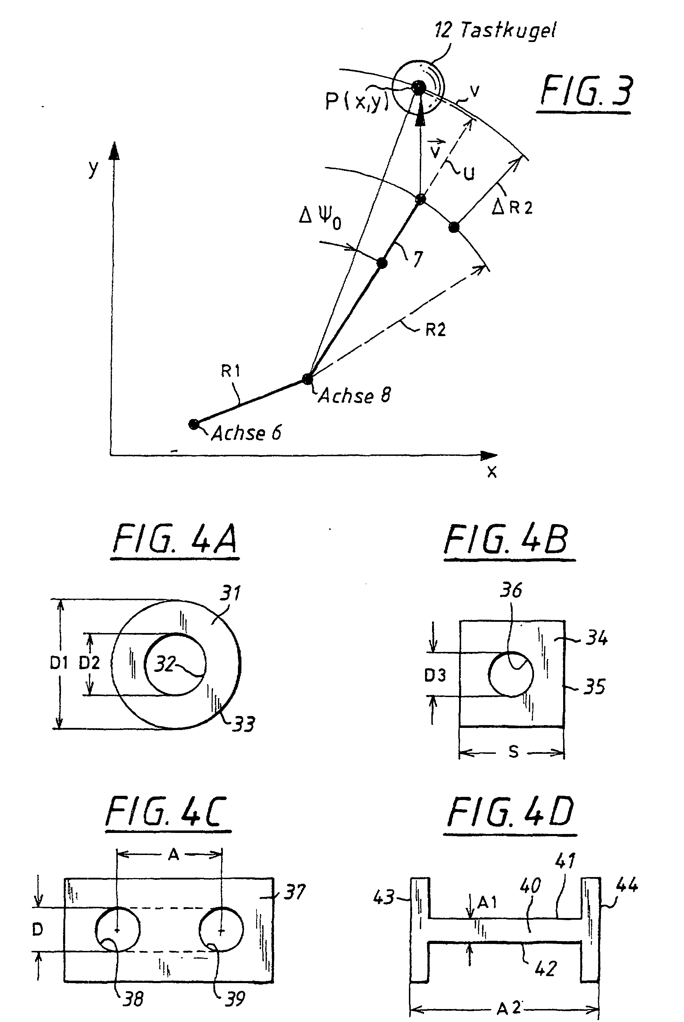

Wenn man erst einmal davon ausgeht, daß der Taststift (11) starr am Taster befestigt ist und in der Ebene (x, y) nicht ausgelenkt werden kann, dann können die Hauptabmessungen (R1, R2, φ0, ψ0, dT) bestimmt werden, indem in einem Kalibriervorgang die Konturen eines der in den Figuren 4a-d dargestellten Kalibriernormale abgefahren werden, die in der Projektion auf eine Ebene einfache geometrische Figuren darstellen.

Beispielsweise wird die Tastkugel (12) nacheinander jeweils im gleichen Drehsinn an der Innenkontur (32) und der Außenkontur (33) des in Figur 4a dargestellten Lehrrings (31) entlang geführt, deren Durchmesser D1 und D2 hochgenau bekannt ist. Hierbei wird eine größere Anzahl von jeweils z.B. 100 - 200 Meßwerten für die Drehwinkel φ und ψ erzeugt. Diese Meßwerte müssen folgenden Gleichungen im Zusammenhang mit Gleichung (1), (2) genügen:

$$F1 = \sqrt{(XP - XM1)^2 + (YP - YM1)^2} - \frac{D1 + dT}{2} = 0 \tag{3}$$

$$F2 = \sqrt{(XP - XM2)^2 + (YP - YM2)^2} - \frac{D2 - dT}{2} = 0 \tag{4},$$

in die wie ersichtlich der Tastkugel-Durchmesser dT mit unterschiedlichen Vorzeichen eingeht. Hierin sind XM1 und YM1 die Mittelpunktskoordinaten der kreisförmigen Innenkontur und XM2 und YM2 die Mittelpunktskoordinaten der Außenkontur. Aus diesen Gleichungen lassen sich alle fünf Hauptabmessungen zuverlässig ermitteln.

Eine ähnliches Gleichungssystem läßt sich aufstellen, wenn man als Kalibrierkörper den in Figur 4b dargestellten Quader benutzt, dessen Seitenlänge (S) sehr genau bekannt ist, und der eine zentrische Bohrung mit genau bekanntem Durchmesser D3 besitzt. Auch hier erhält man durch Abfahren der Innenkontur (36) der Bohrung und der Außenkontur (35) des Quaders eine Vielzahl von Meßwerten, die zu den Abmessungen des Kalibrierkörpers in Beziehung gesetzt werden können. Auch hier geht der Tastkugel-Durchmesser beim Abfahren der Außenkontur (35) des Quaders und der Innenkontur (36) der Bohrung jeweils mit unterschiedlichen Vorzeichen in die Meßergebnisse ein.

Anders ist das bei dem in Figur 4c dargestellten Kalibrierkörpers in Form eines Quaders (37) mit zwei Bohrungen (38) und (39) gleichen Durchmessers. Beim Abfahren dieser Bohrungen geht der Tastkugel-Durchmesser mit gleichem Vorzeichen in die Meßergebnisse ein. Allerdings ist der feste Abstand (A) der beiden Bohrungen (38) und (39) zueinander unabhängig vom Durchmesser der Tastkugel bestimmbar, d.h. der Tastkugel-Durchmesser geht in diesen Abstand mit dem Gewicht Null ein.

Eine weitere Möglichkeit zur Kalibrierung der Hauptabmessungen bietet der in Figur 4d dargestellte Kalibrierkörper. Er besitzt die Form eines Quaders (40), wobei die beiden gegenüberliegenden Seiten (41/42) und (44/43) stark unterschiedliche Abstände A1 und A2 besitzen. Der Ansatz für die Gleichungssysteme, die im Zuge des Kalibriervorganges zu lösen wären, sieht folgendermaßen aus:

$$F1 = (XP - XM) \cdot NX1 + (YP - YM) \cdot NY1 \pm \frac{A1 + dT}{2} = 0 \qquad (5)$$

$$F2 = (XP - XM) \cdot NX2 + (YP - YM) \cdot NY2 \pm \frac{A2 + dT}{2} = 0 \qquad (6)$$

Hierin sind NX1 und NY1 die Koordinaten der Normalen auf den Seiten (41/42) sowie NX2 und NY2 die Koordinaten der Normalen auf den Seiten (43/44), wobei sich die Normalen in einem Punkt schneiden, dessen Schnittpunktskoordinaten mit XM bzw. YM bezeichnet sind.

Auch hier werden durch Abfahren der gegenüberliegenden Seiten (41/42) und (43/44) des Quaders eine Vielzahl von Meßwerten generiert, über die sich die Hauptabmessungen zurückrechnen lassen. Wie man sieht, geht hier der Tastkugel-Durchmesser im Vergleich zu den übrigen Hauptabmessungen mit sehr unterschiedlichem Gewicht ein, je nachdem ob der Abstand A2 der Seiten (43) und (44) oder der Abstand A1 der Seiten (41) und (42) gemessen wird.

Für den Fall, daß an dem Gerät wie in Figur 1 dargestellt ein Taster mit auslenkbarem Taststift (11) befestigt sind, sind in einem weiteren Kalibrierschritt die Eigenschaften des messenden Tastsystems zu bestimmen, indem die räumlichen Verlagerungen des Gelenkarms mit den Taster-Auslenkungen u und v selbst in Beziehung gesetzt werden. Denn der Auslenk-Vektor v in der x-y-Ebene verändert die aktuellen Hauptabmessungen R2 und ψ0 des Gelenkarms. Dieser Sachverhalt wird anhand von Fig. 3 deutlich. Im einfachsten Falle, d.h. wenn die Meßsysteme, die die Taster-Auslenkung u und v messen, parallel bzw. senkrecht zu dem Gelenkarm (7) ausgerichtet sind, ergeben sich die Änderungen von R2 und ψ aus den Signalen u und v gemäß folgender Beziehung:

$$\Delta R2 = a1 \cdot u \qquad (7)$$

$$\Delta \psi = a2 \cdot v / R2 \qquad (8)$$

Hierbei sind a1 und a2 die Tasterkoeffizienten, die die Signale u und v der Taststift-Auslenkung entsprechend der Taststift-Länge übersetzen.

Führt man die anfangs beschriebene Bestimmung der Hauptabmessungen (R1, R2, φ0, ψ0, dT) nicht wie beschrieben mit einem starren Taster, sondern mit einem Taster mit auslenkbarem Taststift durch, dann sind die Gleichungen Nr. (1) und (2) zu ergänzen, indem R2 und ψ aus Gleichung (1) und (2) jeweils durch R2' = R2 + ΔR2 und ψ' = ψ + Δψ ersetzt wird und für ΔR2 sowie für Δψ die in Gleichung (7) und (8) angegebenen Ausdrücke substituiert werden. Man erhält:

$$XP = R1 \cos ( \varphi - \varphi 0) + (R2 + a1u) \cdot$$
$$\cos (\varphi - \varphi 0 + \psi - \psi 0 + \frac{a2}{R2} \cdot v) \qquad (9)$$

$$Yp = R1 \sin (\varphi - \varphi 0) + (R2 + a1u) \cdot$$
$$\sin (\varphi - \varphi 0 + \psi - \psi 0 + \frac{a2}{R2} \cdot v) \qquad (10)$$

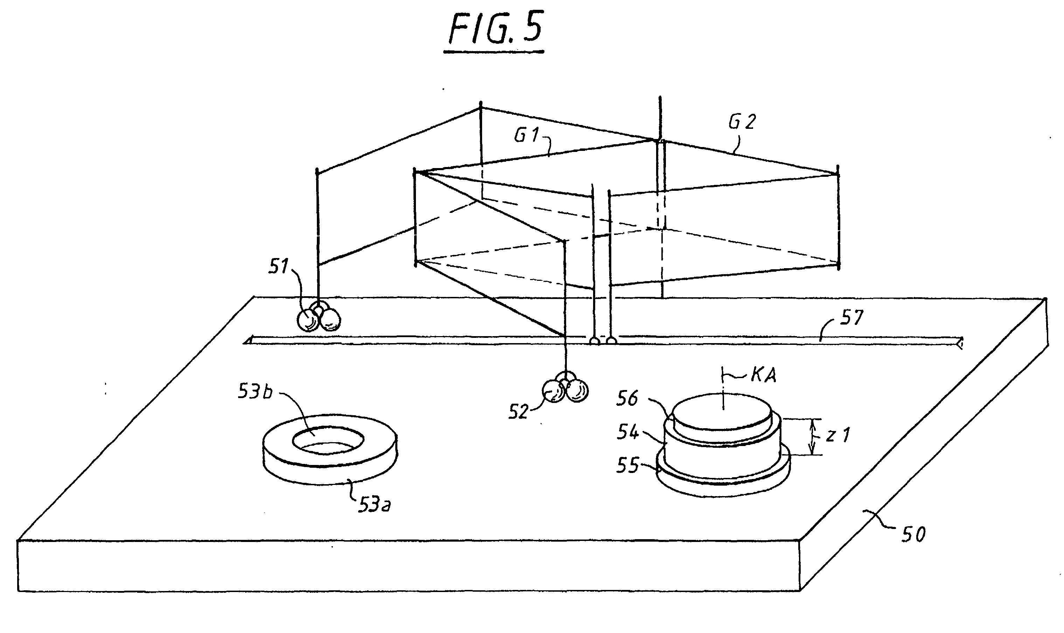

Zur Herstellung definierter Beziehungen zwischen den Taster-Auslenkungen und den räumlichen Verlagerungen des Gelenkarms kann man so vorgehen, daß ein definiertes Kalibriernormal mit nach Größe und Richtung schwankender Auslenkung des Taststifts (11) und/oder wechselnder Betätigungskraft in einer bestimmten Stellung angetastet oder durch Abfahren in einer Meßebene in mehreren Stellungen gemessen wird. Beispielsweise kann das Kalibriernormal als Zentrierkörper ausgeführt sein wie z.B. (Zentrierkörper (51) und (52) in Figur 5) eine Würfelecke, eine konische Zentrierbohrung oder ein Kugeltripel, in der man die Tastkugel fixiert und anschließend die Position des Gelenkarms leicht variiert, so daß sich gleichzeitig Taster-Auslenkungen und Änderungen der Gelenkarmlage ergeben. Für die Meßwerte (φ, ψ, u und v) ergeben sich dann aus (9) und (10) folgende Beziehungen:

$$R1 \cdot \cos(\varphi - \varphi 0) + (R2 + a1u) \cdot$$

$$\cos\left(\varphi - \varphi 0 + \psi - \psi 0 + \frac{a2}{R2} \cdot v\right) - XP = 0 \tag{11}$$

$$R1 \cdot \sin(\varphi - \varphi 0) + (R2 + a1u) \cdot$$

$$\sin\left(\varphi - \varphi 0 + \psi - \psi 0 + \frac{a2}{R2} \cdot v\right) - YP = 0 \tag{12}$$

Hieraus lassen sich die Koeffizienten a1 und a2 mittels Gauß'scher Regressionsrechnung ermitteln.

Die Bestimmung der Hauptabmessungen und die Bestimmung der Koeffizienten der Taster-Auslenkung erfolgt zweckmäßig nach einem iterativen Verfahren, wobei die an einem der Kalibriernormale nach Figur 4a-d ermittelten und gespeicherten Meßwerte und die beim Antasten z.B. einer Würfelecke mit variabler Auslenkung gewonnenen Meßwerte mehrfach hintereinander benutzt werden, um die Gleichungen z.B. (3) und (4) in Verbindung mit (9) und (10) sowie (11) und (12) zu lösen. Man kommt hier nach ca. vier Iterationsschritten zu sehr genauen Werten für die Taster-Koeffizienten (a1, a2) und die Hauptabmessungen (R1, R2, $\varphi 0$, $\psi 0$, dT).

Da die Taster-Koeffizienten in gewissem Ausmaße auch von der Winkelstellung der Gelenkarme (5) und (7), d.h. vom Winkel abhängen können, empfiehlt es sich, die vorgenannten Messungen in mindestens zwei ausgezeichneten Gelenklagen auszuführen, bei denen der Gelenkarm einmal gefaltet und einmal gestreckt ist, wie das anhand von Figur 5 verdeutlicht ist. Dort sind auf der Grundplatte (50) zwei Kugeltripel (51) und (52) an verschiedenen Stellen montiert, in die jeweils mit gefaltetem und gestrecktem Gelenkarm eingetastet werden kann.

Die Kalibrierung der Taster-Auslenkung w in z-Richtung, d.h. im wesentlichen die Bestimmung der Linearität des Meßsystems (23) in Figur 1 kann sehr einfach erfolgen, indem der Motor (2) bei festgehaltenem Taster (11) innerhalb des zulässigen Meßbereiches des Meßsystems (23) verfahren wird, d.h. der Schlitten (4) eine Kalibrierfahrt macht und die Meßwerte des z-Meßsystems (3) genutzt werden, um die Signale des Meßwertgebers (23) zu kalibrieren.

Bisher wurde davon ausgegangen, daß die beiden Drehachsen (6) und (8) zueinander und zur z-Führung (1) exakt parallel sind. Diese Bedingung ist mit vertretbarem konstruktiven und fertigungstechnischen Aufwand nicht immer einzuhalten.

In der Regel ist das Gerät mehr oder weniger verformt, wie das in Fig. 1A überhöht dargestellt ist.

Zur-Ermittlung der Unparallelität der beiden Drehachsen (6) und (8) kann eine Ebene oder eine Gerade, beispielsweise das in

Figur 5 auf der Grundplatte (50) durch eine Nut (57) verkörperte Lineal in den beiden strichpunktiert gezeichneten Gelenklagen abgefahren werden. Aus den Differenzen der Meßwerte in den beiden Gelenklagen wird die Schiefstellung der beiden Achsen (6) und (8) zueinander ermittelt, wobei diese Schiefstellung sowohl durch die Montage der Achsen bedingt sein kann, aber auch durch elastische Verformung aufgrund der Eigengewichte der Gelenkarme (5) und (7).

Um die elastischen Verformungen separat zu erfassen, wird ein definiertes Kalibriernormal wie beispielsweise der Mantel des in Figur 5 mit (54) bezeichneten Zylinders mit dem Radius R und den Achsenkoordinaten Xm und Ym bei geklemmter z-Achse, d.h. bei blockiertem Motor (2) mit schwankender vertikaler Auslenkung und/oder Betätigungskraft Fv abgefahren. Anstelle des vertikal stehenden Zylinders kann selbstverständlich auch ein anderes Kalibriernormal mit senkrechten Flächen, beispielsweise ein Quader oder sonstiges prismatisches Teil verwendet werden. Die so erhaltenen Meßwerte sind untereinander und mit den übrigen Meßwerten der Kalibrierung in Beziehung zu setzen und die Korrektur-Parameter (C1) und (C2) für die Verformung können dann aus folgenden Gleichungen bestimmt werden:

$$F1 = \sqrt{(XP - Xm)^2 + (Y - Ym)^2} - R = 0 \tag{13}$$

$$XP = R1 \cdot \cos(\varphi - \varphi 0) + R2 \cdot \cos(\varphi - \varphi 0 + \psi - \psi 0) +$$

$$\{C1 \cdot \sin(\varphi - \varphi 0) \cdot \sin(\psi - \psi 0) +$$

$$C2 \cdot \cos(\varphi - \varphi 0) \cdot \cos(\psi - \psi 0)\} \cdot Fv \tag{14}$$

$$YP = R1 \cdot \sin(\varphi - \varphi 0) + R2 \cdot \sin(\varphi - \varphi 0 + \psi - \psi 0) +$$

$$\{-C1 \cdot \cos(\varphi - \varphi0) \cdot \sin(\psi - \psi0) +$$

$$C2 \cdot \sin(\varphi - \varphi0) \cdot \cos(\psi - \psi0)\} \cdot Fv \tag{15}$$

Zur Bestimmung der Schiefstellung der ersten Drehachse (6) zur vertikalen z-Führung (1) kann ein räumliches Kalibriernormal abgefahren werden, das eine Achslage verkörpert. Ein solches Normal wird beispielsweise durch die beiden umlaufenden Nuten (55) und (56) an dem auf der Platte (50) (Figur 5) montierten Zylinder (54) verkörpert. Durch das Abfahren der Nut (55) mit der Tastkugel (12) ergeben sich Meßwerte, die eine im Raum ausgerichtete Achse KA mit dem dadurch definiertem Koordinatenmeßsystem x', y', z', definieren. Beim anschließenden Abfahren der Nut (56), deren Mittelpunkt M2 hochgenau auf der Achse KA liegt, mißt man dann, wenn die Gelenkachse (6) schief steht, einen Versatz des Mittelpunkts M2. Die Schiefstellung ($\delta$x, y) der ersten Gelenkachse (6) ergibt sich aus den Koordinaten $\Delta$XM1 und $\Delta$XM2 dieses Versatzes gemäß folgenden Gleichungen:

$$\delta x = \frac{\Delta XM2}{z1} \tag{16}$$

$$\delta y = \frac{\Delta YM2}{z1} \tag{17}$$

Hierbei ist z1 der Abstand der beiden Nuten (55) und (56) am Zylinder (54), wobei dieser Abstand sehr genau bekannt ist.

Während wie vorstehend ausgeführt die Kalibrierung der Hauptabmessungen (R1, R2, $\varphi$0, $\psi$0, dT) sowie der Taster-Parameter (a1) und (a2) relativ häufig, beispielsweise nach jedem Tasterwechsel erforderlich ist, brauchen die Biegeparameter und die Schiefstellung der Achsen nur einmal nach der Fertigstellung des Koordinatenmeßgerätes ermittelt werden. Dennoch ist es zweckmäßig, alle für die Kalibrierung erforderlichen Kalibriernormale auf eine gemeinsame Platte zu montieren, wie das in Figur 5 dargestellt ist. Es können dann einzelne oder alle Kalibrierschritte nach Auflegen der Platte (50) auf den Meßtisch des Koordinatenmeßgerätes durchgeführt werden. Dabei sieht der Ablauf so aus, daß beispielsweise auf dem an das Koordinatenmeßgerät angeschlossenen Rechner der Kalibriermodus aufgerufen wird, woraufhin der Rechner die Bedienperson auffordert, die Platte aufzulegen und in die darauf angeordneten Kalibrierkörper (51, 52) einzutasten bzw. die Konturen (53a, 53b, 54, 56) wie vorstehend beschrieben abzufahren. Aus den Meßwerten berechnet der Rechner dann die Kalibrierdaten und speichert diese für den eigentlichen Meßprozeß an den zu vermessenden Werkstücken mit unbekannten Geometrie-Abweichungen.

**Patentansprüche**

1. Verfahren zur Kalibrierung eines Koordinatenmeßgeräts, dessen Taster (10) gelenkig über zwei aufeinander folgende, parallele Drehachsen (6, 8) in einer Ebene (x, y) beweglich geführt ist, dadurch gekennzeichnet, daß zur Kalibrierung der Hauptabmessungen (R1, R2, $\varphi$0, $\psi$0, dT) des Koordinatenmeßgeräts

   - Konturen (32, 33; 53a, 53b; 35, 36; 38, 39, 40, 41) bzw. geometrische Elemente an einem Kalibrierkörper (31; 34; 37; 40) mit dem Taster abgefahren werden, die so gewählt sind, daß der Durchmesser (dT) der an dem Taster befestigten Tastkugel (12) in das Meßergebnis für die geometrischen Elemente bzw. deren Abstand jeweils mit unterschiedlichem Gewicht oder Vorzeichen eingeht,
   - und daß aus den beim Abfahren der Konturen gewonnenen Meßwerte für die Position des Tasters (10) in der Ebene (x, y) und aus den bekannten Abmessungen (D1/D2; S/D3; D/A; A1/A2) der geometrischen Elemente die Hauptabmessungen (R1, R2, $\varphi$0, $\psi$0, dT) bestimmt werden.

2. Verfahren nach Anspruch 1, wobei die geometrischen Elemente jeweils eine kreisförmige oder rechteckige Innenkontur (32, 36) und eine kreisförmige oder rechteckige Außenkontur (33, 35) besitzen.

3. Verfahren nach Anspruch 2, wobei die beiden geometrischen Elemente durch die Innen- und Außenkontur eines ringförmigen Kalibrierkörpers (31) gebildet sind.

4. Verfahren nach Anspruch 1, wobei die geometrischen Elemente jeweils eine Innen- oder Außenkontur (38, 39) besitzen, die in einem festen, bekannten gegenseitigen Abstand (A) zueinander angeordnet sind.

5. Verfahren nach Anspruch 4, wobei die geometrischen Elemente zwei Bohrungen (38, 39) in festem gegenseitigen Abstand (A) sind.

6. Verfahren nach Anspruch 1, wobei die geometrischen Elemente jeweils Geradenpaare mit unterschiedlichem Abstand bzw. die gegenüberliegenden Seiten (41/42; 43/44) eines Rechtecks (40) mit deutlich unterschiedlichen Seitenlängen (A1, A2) sind.

7. Verfahren nach Anspruch 6, wobei das Koordinatenmeßgerät einen Taster (10) mit in der Ebene (x, y) auslenkbarem Taststift (11) besitzt und die Taststift-Auslenkung mit den Bewegungen des Tasters (40) in der Ebene (x, y) in Beziehung gesetzt werden, indem ein Kalibriernormal (51, 52) mehrfach mit nach Größe und Richtung unterschiedlicher Auslenkung (u, v) des Taststifts (11) angetastet bzw. abgefahren wird und aus den erhaltenen Meßwerten $(\varphi, \psi)$ für die Position des Tasters (10) in der Ebene (x, y) und für die Auslenkung (u, v) des Taststifts (11) in der Ebene (x, y) die Koeffizienten (a1, a2) der Taststift-Auslenkung (u, v) bestimmt werden.

8. Verfahren nach Anspruch 7, wobei das Kalibriernormal in mindestens zwei ausgezeichneten Stellungen des Tasters (10) im Meßbereich des Koordinatenmeßgerätes angetastet bzw. abgefahren wird.

9. Verfahren nach Anspruch 8, wobei das Kalibriernormal durch einen oder mehrere Zentrierkörper (51, 52) gebildet ist, die im Meßbereich an Stellen angeordnet sind, bei deren Antastung der zwei Gelenkarme umfassende Arm unterschiedliche Winkelstellungen einnimmt.

10. Verfahren nach einem der Ansprüche 7-9, wobei die Bestimmung der Hauptabmessungen (R1, R2, $\varphi$0, $\psi$0, dT) und die Bestimmung der Koeffizienten (a1, a2) der Taststift-Auslenkung nach Aufnahme der Meßpunkte an den geometrischen Elementen (32, 33) und am Kalibriernormal (51, 52) iterativ erfolgt.

11. Verfahren nach einem der Ansprüche 1-10, wobei zur Ermittlung von Parallelitäts-Abweichungen der beiden Drehachsen (6, 8) eine Gerade (57) oder eine Ebene mit dem Taster in den zwei möglichen unterschiedlichen Gelenklagen (G1, G2) abgefahren wird und aus den Differenzen der in beiden Gelenklagen (G1, G2) ermittelten Meßwerte die Parallelität-Abweichung der Drehachsen (6, 8) bestimmt wird.

12. Verfahren nach einem der Ansprüche 1-11, wobei zur Kalibrierung der aufgrund der Auslenkung (w) des Tasters (10) in Richtung der parallelen Drehachsen (6, 8) resultierenden elastischen Verformung des zwei Gelenkarme unfassenden Arms eine zu den Drehachsen (6, 8) parallele Meßfläche (54) mit nach Größe und Richtung unterschiedlicher Auslenkung des Tasters (10) bzw. unterschiedlicher Betätigungskraft abgefahren wird und die erhaltenen Meßwerte untereinander sowie mit den Kalibrierdaten für die Hauptabmessung (R1, R2, $\psi$0, $\psi$0, dT) in Beziehung gesetzt werden und daraus die Korrektur-Parameter (C1 C2) für die elastische Verformung des zwei Gelenkarme umfassenden Arms bestimmt werden.

13. Verfahren nach Anspruch 12, wobei die Meßfläche (54) der Mantel eines zu den Drehachsen (6, 8) parallelen Zylinders oder ein prismatisches Teil mit zu den Drehachsen parallelen Flächen ist.

14. Verfahren nach Anspruch 1, wobei der zwei Gelenkarme (5/7) umfassende Arm an einer zu den Drehachsen (6, 8) parallelen Linearführung (1) befestigt ist und zur Bestimmung der Parallelitäts-Abweichungen zwischen der Führung (1) und der daran anschließenden Drehachse (6) eine zu den Drehachsen parallele Fläche (54) an mehreren in Führungsrichtung (z) beabstandeten Stellen (55, 56) abgefahren wird.

15. Verfahren nach einem der Ansprüche 7-14, wobei die geometrischen Elemente (53a, 53b) bzw. Kalibriernormale (51, 52) und Meßflächen (54) oder Meßlinien (57) gemeinsam auf einer Grundplatte angeordnet sind.

## Claims

1. Method for calibrating a coordinate measuring instrument whose probe (10) is guided movably in a plane (x, y) in an articulated fashion by two successive, parallel axes of rotation (6, 8),

   characterized in that in order to calibrate the principal dimensions (R1, R2, $(\varphi_0, \psi_0, dT)$ of the coordinate measuring instrument

   - contours (32, 33; 53a, 53b; 35, 36; 38, 39, 40, 41) and/or geometrical elements are traced on a calibration body (31; 34; 37; 40) with the aid of the probe, which are selected such that the diameter (dT) of the probe sphere (12) fastened on the probe features in the measurement result for the geometrical elements and/or their spacing with a different weighting or sign in each case,

- and in that the principal dimensions (R1, R2, $\varphi_0$, $\psi_0$, dT) are determined from the measured values, obtained during tracing of the contours, for the position of the probe (10) in the plane (x, y) and from the known dimensions (D1/D2; S/D3; D/A; A1/A2) of the geometrical elements.

2. Method according to Claim 1, in which the geometrical elements in each case have a circular or rectangular inner contour (32, 36) and a circular or rectangular outer contour (33, 35).

3. Method according to Claim 2, in which the two geometrical elements are formed by the inner and outer contours of an annular calibration body (31).

4. Method according to Claim 1, in which the geometrical elements respectively have an inner or outer contour (38, 39) which are arranged at a fixed, known mutual spacing (A) from one another.

5. Method according to Claim 4, in which the geometrical elements are two bores (38, 39) at a fixed mutual spacing (A).

6. Method according to Claim 1, in which the geometrical elements are in each case pairs of straight lines of different spacing and/or the opposite sides (41/42; 43/44) of a rectangle (40) of substantially differing side lengths (A1, A2).

7. Method according to Claim 6, in which the coordinate measuring instrument has a probe (10) with a probe pin (11), which can be deflected in the plane (x, y) and the relationship between the probe pin deflection and the movements of the probe (40) in the plane (x, y) is found by scanning or tracing a calibration normal (51, 52) multiply with the aid of a deflection (u, v) of the probe pin (11) differing in magnitude and direction, and the coefficients (a1, a2) of the probe pin deflection (u, v) are determined from the measured values ($\varphi$, $\psi$) obtained for the position of the probe (10) in the plane (x, y) and for the deflection (u, v) of the probe pin (11) in the plane (x, y) .

8. Method according to Claim 7, in which the calibration normal is scanned or traced in the measuring range of the coordinate measuring instrument in at least two special positions of the probe (10).

9. Method according to Claim 8, in which the calibration normal is formed by one or more centring bodies (51, 52) which are arranged in the measuring range at points where the arm comprising two articulated arms assumes different angular positions when said points are being scanned.

10. Method according to one of Claims 7 - 9, in which the determination of the principal dimensions (R1, R2, $\varphi 0$, $\psi 0$, dT) and the determination of the coefficients (a1, a2) of the probe pin deflection are performed iteratively at the geometrical elements (32, 33) and at the calibration normal (51, 52) after picking up the measuring points.

11. Method according to one of Claims 1 - 10, in which a straight line (57) or a plane is traced with the aid of the probe in the two possible different articulation positions (G1, G2) in order to determine parallelity deviations between the two axes of rotation (6, 8), and the parallelity deviations between the axes of rotation (6, 8) is determined from the differences between the measured values determined in the two articulation positions (G1, G2).

12. Method according to one of Claims 1 - 11, in which in order to calibrate the elastic deformation, resulting from the deviation (w) of the probe (10) in the direction of the parallel axes of rotation (6, 8), in the arm comprising two articulated arms, a measuring surface (54) parallel to the axes of rotation (6, 8) is traced with the aid of a deflection, differing in magnitude and direction, of the probe (10) and/or a different actuating force, and relationships are found between the measurement results obtained and between said results and the calibration data for the principal dimensions (R1, R2, $\varphi_0$, $\psi_0$, dT), and the correction parameters (C1, C2) for the elastic deformation of the arm comprising two articulated arms are determined therefrom.

13. Method according to Claim 12, in which the measuring surface (54) is the lateral surface of a cylinder parallel to the axes of rotation (6, 8), or a prismatic part with faces parallel to the axes of rotation.

14. Method according to Claim 1, in which the arm comprising two articulated arms (5/7) is fastened on a linear guide (1) parallel to the axes of rotation (6, 8), and in order to determine the parallelity deviations between the guide (1) and the axis of rotation (6) adjoining it, a surface (54) parallel to the axes of rotation is traced at a plurality of points (55, 56) spaced apart in the guiding direction (z).

15. Method according to one of Claims 7 - 14, in which the geometrical elements (53a, 53b) and/or calibration normals (51, 52) and measuring surfaces (54) or measuring lines (57) are arranged jointly on a base plate.

**Revendications**

1. Procédé pour calibrer un appareil de mesure de coordonnées dont le palpeur (10) est réalisé de manière à pouvoir se déplacer sur deux axes de rotation parallèles superposés (6, 8) de manière articulée dans un plan (x, y), caractérisé en ce que pour calibrer les dimensions principales (R1, R2, $\varphi 0$, $\psi 0$, dT) de l'appareil de mesure de coordonnées

   - le palpeur parcourt des contours (32, 33 ; 53a, 53b ; 35, 36 ; 38, 39, 40, 41) ou des éléments géométriques sur un corps de calibrage (31 ; 34 ; 37 ; 40), lesquels sont choisis de manière à ce que le diamètre (dT) de la bille de palpage (12) fixée au palpeur intervienne à chaque fois avec un poids ou un signe différent dans le résultat de la mesure pour les éléments géométriques ou leur écart ;
   - et que les dimensions principales (R1, R2, ($\varphi 0$, $\psi 0$, dT) sont déterminées à partir des valeurs mesurées de la position du palpeur (10) lors du parcours des contours dans le plan (x, y) et des dimensions connues (D1/D2 ; S/D3 ; D/A ; A1/A2) des éléments géométriques.

2. Procédé selon la revendication 1, avec lequel les éléments géométriques possèdent chacun un contour intérieur circulaire ou rectangulaire (32, 36) et un contour extérieur circulaire ou rectangulaire (33, 35).

3. Procédé selon la revendication 2, avec lequel les deux éléments géométriques sont formés par le contour intérieur et extérieur d'un corps de calibrage (31) de forme annulaire.

4. Procédé selon la revendication 1, avec lequel les éléments géométriques possèdent chacun un contour intérieur ou extérieur (38, 39) qui sont disposés selon un écart (A) fixe connu l'un par rapport à l'autre.

5. Procédé selon la revendication 4, avec lequel les éléments géométriques sont deux alésages (38, 39) à un écart (A) fixe l'un par rapport à l'autre.

6. Procédé selon la revendication 1, avec lequel les éléments géométriques sont chacun une paire de droites à écartement différent ou les côtés opposés (41/42 ; 43/44) d'un rectangle (40) dont les côtés (A1, A2) ont des longueurs nettement différentes.

7. Procédé selon la revendication 6, avec lequel l'appareil de mesure de coordonnées comprend un palpeur (10) avec une broche de palpage (11) pouvant être déviée dans le plan (x, y) et la déviation de la broche de palpage est mise en relation avec les mouvements du palpeur (40) dans le plan (x, y) en ce qu'un étalon de calibrage (51, 52) est palpé ou parcouru plusieurs fois avec différentes amplitudes et directions de déviation (u, v) de la broche de palpage (11) et les coefficients (a1, a2) de déviation de la broche de palpage (u, v) sont déterminés à partir des valeurs mesurées ($\varphi$, $\psi$) obtenues pour la position du palpeur (10) dans le plan (x, y) et pour la déviation (u, v) de la broche de palpage (11) dans le plan (x, y).

8. Procédé selon la revendication 7, avec lequel l'étalon de calibrage est palpé ou parcouru en au moins deux positions remarquables du palpeur (10) dans la plage de mesure de l'appareil de mesure de coordonnées.

9. Procédé selon la revendication 8, avec lequel l'étalon de calibrage est formé par un ou plusieurs corps de centrage (51, 52) qui sont disposés dans la plage de mesure en des endroits où le bras comprenant deux bras articulés prend des positions angulaires différentes.

10. Procédé selon l'une des revendications 7-9, avec lequel la détermination des dimensions principales (R1, R2, $\varphi 0$, $\psi 0$, dT) et la détermination des coefficients (a1, a2) de déviation de la broche de palpage s'effectuent de manière itérative après l'acquisition des points de mesure sur les éléments géométriques (32, 33) et sur l'étalon de calibrage (51, 52).

11. Procédé selon l'une des revendications 1-10, avec lequel le palpeur parcourt une droite (57) ou un plan dans les deux positions d'articulation (G1, G2) différentes possibles pour déterminer les différences de parallélisme entre les deux axes de rotation (6, 8) et la différence de parallélisme des axes de rotation (6, 8) est déterminée à partir des différences des valeurs mesurées déterminées dans les deux positions d'articulation (G1, G2).

12. Procédé selon l'une des revendications 1-11, avec lequel une surface de mesure (54) parallèle aux axes de rotation (6, 8) est parcourue avec différentes amplitudes et directions de déviation du palpeur (10) ou différentes forces de manoeuvre pour calibrer la déformation élastique du bras comprenant deux bras articulés résultant en raison de la déviation (w) du palpeur (10) dans le sens des axes de rotation parallèles (6, 8) et les valeurs mesurées obtenues sont mises en relation les unes avec les autres ainsi qu'avec les données de calibrage pour les dimensions principales (R1, R2, $\varphi$0, $\varphi$'0, dT) et les paramètres de correction (C1, C2) pour la déformation élastique du bras comprenant deux bras articulés en sont déduits.

13. Procédé selon la revendication 12, avec lequel la surface de mesure (54) est la chemise d'un cylindre parallèle aux axes de rotation (6, 8) ou une pièce prismatique aux surfaces parallèles aux axes de rotation.

14. Procédé selon la revendication 1, avec lequel le bras comprenant deux bras articulés (5/7) est fixé à un guide linéaire (1) parallèle aux axes de rotation (6, 8) et une surface (54) parallèle aux axes de rotation est parcourue en plusieurs endroits (55, 56) écartés les uns des autres dans le sens de guidage (z) pour déterminer les différences de parallélisme entre le guide (1) et l'axe de rotation (6) qui vient s'y raccorder.

15. Procédé selon l'une des revendications 7-14, avec lequel les éléments géométriques (53a, 53b) ou les étalons de calibrage (51, 52) et les surfaces de mesure (54) ou les lignes de mesure (57) sont disposés en commun sur une plaque de base.

EP 0 703 430 B1

FIG.1

FIG. 1A

12

# FIG. 2

_FIG. 3_

_12 Tastkugel_

P(x,y)

$\Delta\psi_0$

7

R1

R2

Achse 8

Achse 6

_FIG. 4A_

31

32

33

D1  D2

_FIG. 4B_

36

34

35

D3

S

_FIG. 4C_

A

37

D

38    39

_FIG. 4D_

41

43    40    44

A1

42

A2

14

# FIG.5

EP 0 703 430 B1